Europäisches Patentamt

European Patent Office

Office européen des brevets

(11) Publication number: **0 431 875 A2**

(12) **EUROPEAN PATENT APPLICATION**

(21) Application number: 90313116.7

(22) Date of filing: 03.12.90

(51) Int. Cl.⁵: **H04N 7/04**

(30) Priority: 04.12.89 JP 313475/89
04.12.89 JP 313476/89

(43) Date of publication of application:
12.06.91 Bulletin 91/24

(84) Designated Contracting States:
DE FR GB NL

(71) Applicant: **MATSUSHITA ELECTRIC
INDUSTRIAL CO., LTD.**
1006, Oaza Kadoma
Kadoma-shi, Osaka-fu, 571 (JP)

(72) Inventor: **Kasahara, Mitsuhiro**
3-17-3, Nagaonishimachi
Hirakata-shi, Osaka-fu 573 (JP)

(74) Representative: **Crawford, Andrew Birkby et al
A.A. THORNTON & CO. Northumberland
House 303-306 High Holborn
London WC1V 7LE (GB)**

(54) **Energy dispersal signal adding apparatus and energy dispersal signal removing apparatus.**

(57) In a satellite broadcasting system, an energy dispersal signal adding apparatus at the transmitter side has a circuit for superposing on a video signal to be transmitted information indicating a level of an energy dispersal signal superposed on the video signal, and an energy dispersal signal removing apparatus at the receiver side has a circuit for detecting the level information superposed on a received video signal, and a circuit for producing an inverse wave of the energy dispersal signal based on the detected level information An apparatus.

FIG. 3

# ENERGY DISPERSAL SIGNAL ADDING APPARATUS AND ENERGY DISPERSAL SIGNAL REMOVING APPARATUS

## BACKGROUND OF THE INVENTION

### 1.Field of the Invention

The present invention relates to a satellite broadcasting system, and more particulary to an energy dispersal signal adding apparatus in a transmission side for adding an energy dispersal signal to a video signal and an energy dispersal signal removing apparatus in a receiver side for removing the energy dispersal signal from the transmitted video signal.

### 2.Description of the Prior Art

In the satellite broadcasting, in which video signal is frequency-modulated and transmitted by a broadcasting satellite or a communications satellite, it is required that the transmitted FM signal does not interfere with the signals of the terrestrial broadcasting. To avoid such interference, an energy dispersal signal is superposed on the video signal of the satellite broadcasting. The energy dispersal signal is a triangular wave signal synchronized with the frame period of the video signal as disclosed in a Japanese book, "Broadcasting Satellite Technology", published by NHK (Nihon Hoso Kyokai), or Japanese Broadcasting Cooperation, on November 1982, pages 46-48. The level (amplitude) of the energy dispersal signal is changed depending on the kind of satellite used. For example, the level in terms of the frequency deviation of the FM signal is 0.6 MHz in the case of the broadcasting satellite and 1.1 MHz or 2.2 MHz in the case of the communications satellite.

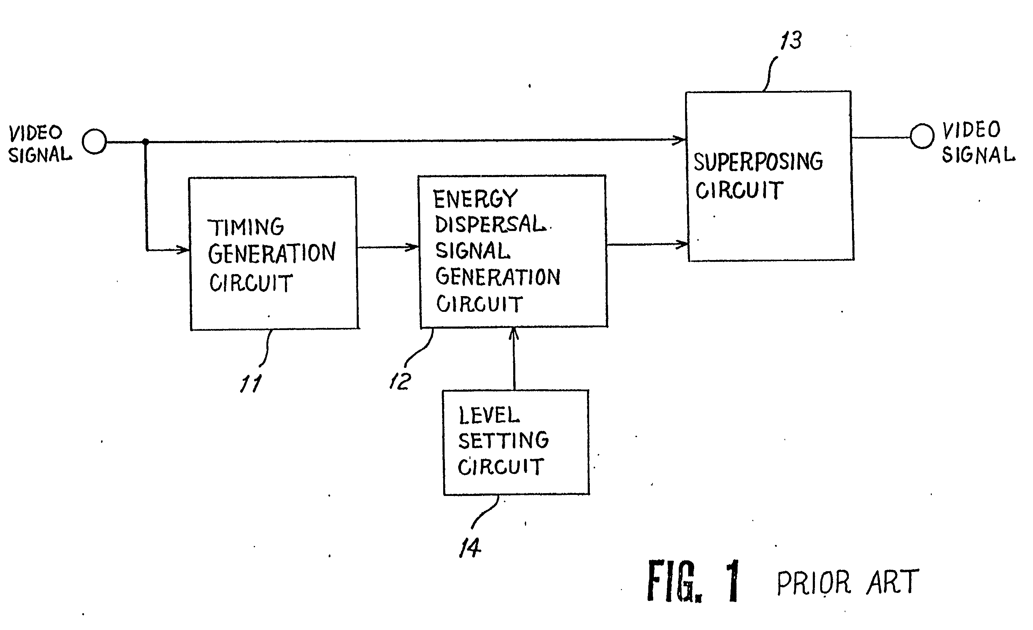

A conventional energy dispersal signal adding apparatus is shown in Fig. 1. Referring to Fig. 1, A timing generation circuit 11 detects from an input video signal the frame synchronization signal of the video signal, and generates from the detected frame synchronization signal a timing signal indicating a timing at which the energy dispersal signal is to be superposed. An energy dispersal signal generation circuit 12 is responsive to the timing signal from the timing generation circuit 12 for generating an energy dispersal signal. A superposing circuit 13 superposes the generated energy dipersal signal on the input video signal. The level of the energy dispersal signal generated by the circuit 12 is set by a level setting circuit 14.

In the receiver side, the energy dispersal signal must be removed from the received video signal. Thus the receiver of the satellite broadcasting system is provided with an energy dispersal signal removing apparatus. A conventional energy dispersal signal removing apparatus is shown in the above-mentioned Japanese book, "Broadcasting Satellite Technology", pages 47-48, in which the receiverd video signal after frequency-demodulated is passed thropugh a clamping circuit for removing the energy dispersal signal. This apparatus is simple in circuit configuration. However, since the clamping level is pre-adjusted depending on the type of the signal to be received and fixed at the pre-adjusted level, the apparatus is not flexible in view of the existance of various satellites using energy dispersal signals different in level from each other. That is, in order to receive a signal from a different satellite, it is required to manually re-adjust the clampling level.

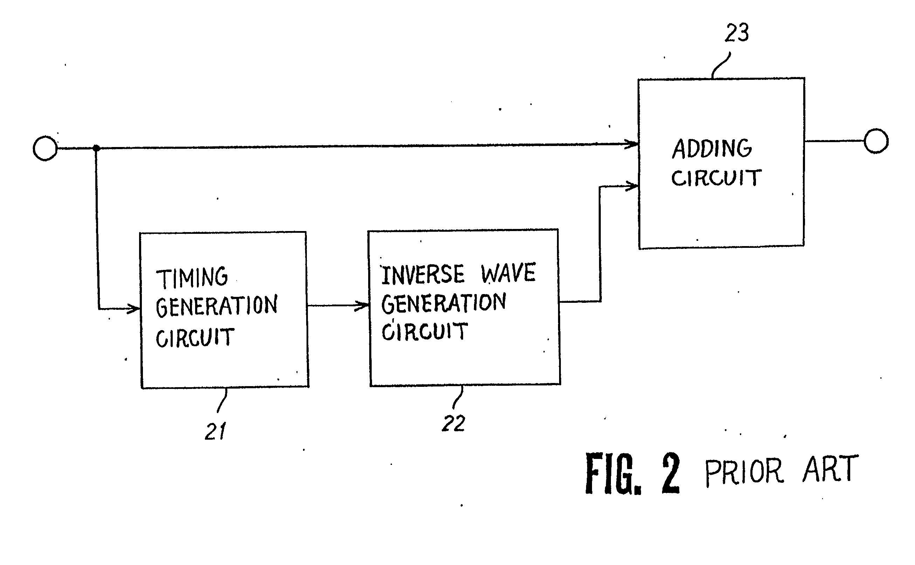

Another conventional energy dispersal signal removing apparatus is as shown in Fig. 2, in which the superposed energy dispersal signal is cancelled by an inverse wave of the energy dispesal signal (which has a phase inverse to that of the superposed energy dispersal signal). Referring to Fig. 2, a timing generation circuit 21 detects the frame synchronizing signal from the received and frequency-demodulated video signal, and generates from the detected frame synchronizing signal a timing signal indicating the timimg at which the energy dispersal signal is superposed. Based on the timing detected by the timing generation circuit 21, an inverse wave generation circuit 22 generates an inverse wave which is opposite in phase to and the same in level as the superposed energy dispersal signal. The level of the inverse wave is pre-set to be equal to the level of the energy dispersal signal superposed on the video signal to be received, and fixed at the pre-set level. An adding circuit 23 adds the inverse wave to the received video signal thereby to remove the energy dispersal signal from the received video signal. This apparatus has the same problem as the above-described clamping type because the level of the inverse wave is fixed. That is, in order to receive a signal from a different satellite, it is required to manually re-adjust the level of the inverse wave.

Still another conventional energy dispersal signal removing apparatus is disclosed in Japanese Patent Publication of Laid-Open No.58-205380 (1983) in which the superposed energy dispersal signal is removed using a negative feedback of the signal components in the energy dispersal signal frequency region. An input video signal is passed through a low-pass filter passing only the signal components in the energy dispersal signal frequency region. The output of the low-pass filter is subtracted from the input video signal by a subtractor. However, since the low-pass filter causes waveform distortion and phase delay of the energy dispersal signal, it is difficult to completely remove the energy dispersal signal.

## SUMMARY OF THE INVENTION

Accordingly, it is an object of the present invention to provide a satellite broadcasting system in which the energy dispersal signal can be accurately removed at the receiver side regardless of the level of the energy dispersal signal.

To achieve this object, according to the present invention, an energy dispersal signal adding apparatus at the transmitter side has a circuit for superposing on a video signal to be transmitted information indicating a level of an energy dispersal signal superposed on the video singal, while on the other hand, an energy dispersal signal removing apparatus at the receiver side has a circuit for detecting the level information superposed on a received video signal, and a circuit for producing an inverse wave of the energy dispersal signal based on the detected level information.

More specifically, an energy dispersal signal adding apparatus comprises : a timing generation circuit for generating from a video signal to be transmitted a timing signal indicative of a timing at which an energy dispersal signal is to be superposed on the video signal ; a level setting circuit for producing level information indicative of a level of the energy dispersal signal ; an energy dispersal signal generation circuit for generating the energy dispersal signal based on the timing signal from the timing generation circuit and the level information from the level setting circuit; a level information adding circuit for superposing the level information from the level setting circuit on the video signal in, for example, a vertical blanking period ; and an adding circuit for adding the energy dispersal signal generated by the energy dispersal signal generation circuit and an output signal of the level information adding circuit.

An energy dispersal signal removing apparatus comprises : a timing generation circuit for generating from a received video signal a timing signal indicative of a timing at which an energy dispersal signal is superposed on the received video signal ; a level information detection circuit for detecting from the received video signal level information indicative of a level of the energy dispersal signal and superposed on the received video signal ; an inverse wave generation circuit for generating an inverse wave of energy dispersal signal which is opposite in phase to and the same in level as the energy dispersal signal superposed on the received video singal based on the timing signal from the timing generation circuit and the level information from the level information detection circuit ; and an adding circuit for adding the inverse wave and the received video signal to remove the energy dispersal signal superposed on the received signal.

According to the present invention, since the energy dispersal signal superposed on the video signal is cancelled by using the inverse wave which is opposite in phase to and the same in level as the superposed energy dispersal signal, the superposed energy dispersal signal can be completely removed from the video signal. Further, since the level information of the dispersal signal is superposed on the transmitted signal so as to be detectable at the receiver side, the level of the inverse wave of the energy dispersal signal generated at the receiver side can be automatically adjusted to be equal to the level of the superposed energy dispersal signal. Therefore, if a transmitter in each satellite is provided with an energy dispersal signal adding apparatus of the present invention, a receiver provided with an energy dispersal signal removing apparatus of the present invention can receive signals transmitted from different satellites without any manual re-sdjustment.

## BRIEF DESCRIPTION OF THE DRAWINGS

Fig. 1 is a schematic block diagram showing a conventional energy dispersal signal adding apparatus ;

Fig. 2 is a schematic block diagram showing a conventional energy dispersal signal removing apparatus ;

Fig. 3 is a schematic block diagram showing a transmitter incorporating therein an energy dispersal signal adding apparatus as an embodiment of the present invention ;

Fig. 4 is a schematic waveform diagram showing signals at corresponding portions in the block diagram of Fig. 3 ;

Fig. 5 is a diagram showing a transmission signal construction of the MUSE system ;

Fig. 6 is a schematic block diagram showing a receiver incorporating therein an energy dispersal signal removing apparatus as an embodiment of the present invention ; and

Fig. 7 is a schematic waveform diagram showing signals at corresponding portions in the block diagram of Fig. 6.

## DESCRIPTION OF THE PREFERRED EMBODIMENTS

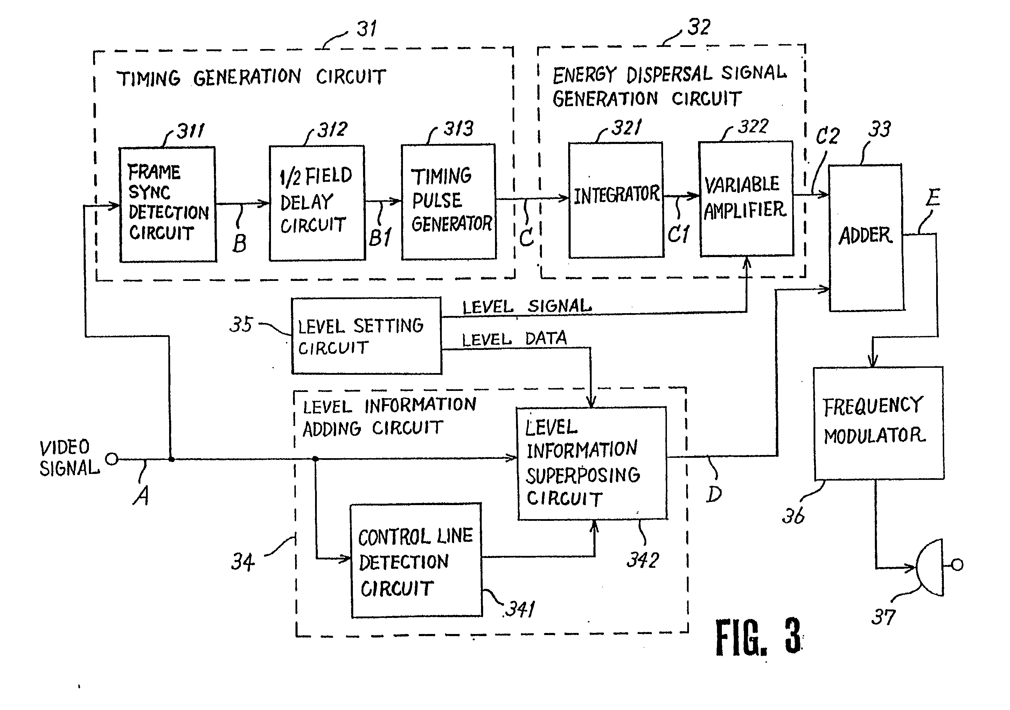

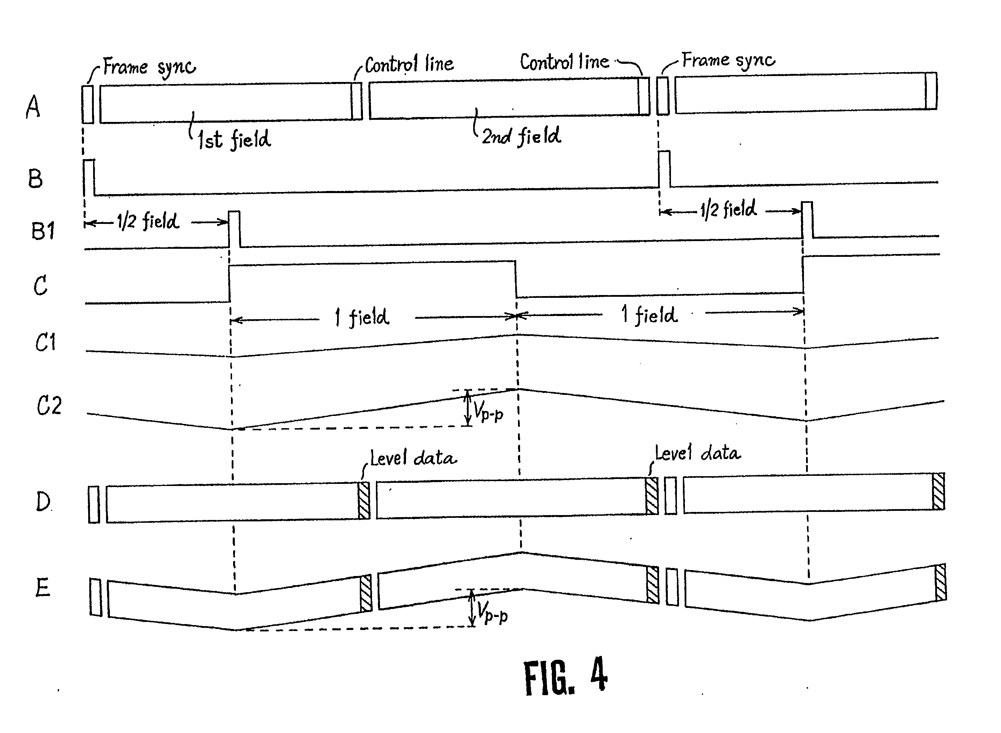

Fig. 3 is a schematic block diagram showing a transmitter incorporating therein an energy dispersal signal adding apparatus as an embodiment of the present invention, and Fig. 4 is a schematic waveform diagram showing signals at corresponding portions A, B, B1, C, C1, C2, D and E in the block diagram of Fig. 3. The energy dispersal signal adding apparatus comprises a timing generation circuit 31 for generating from an input video signal A a timing pulse C indicative of a timing at which an energy dispersal signal is to be superposed on the input video signal, a level setting circuit 35 for producing a level signal and a level data each indicative of a level of the energy dispersal signal, an energy dispersal signal generation circuit 32 for generating an energy dispersal signal C2 based on the timing pulse and the level signal, a level information adding circuit 34 for adding the level data to the input video signal to obtain a video signal D containing therein the level data, and an adder 33 for adding the energy dispersal signal C2 and the video signal D to obtain a video signal E which is added with the energy dispersal signal and the level data. The video signal E outputted from the energy dispersal signal adding apparatus is frequency-modulated by a frequency modulator 36, and the frequency-modulated (FM) signal is transmitted from an antenna 37.

The input video signal A has a frame synchronization signal (frame sync signal) for synchronization of each frame composed of two fields. An arbitrary horizontal scanning line in a vertical blanking period of each field is used as a control line in which the level data will be inserted in the level information adding circuit 34.

The energy dispersal signal C2 is a triangular waveform signal whose period is the same as the frame period of the video signal and whose phase is delayed by a period of 1/2 field from the phase of the frame sync signal. The "level" of the energy dispersal signal means the peak-to-peak value ($V_{p-p}$) of the triangular waveform.

The level setting circuit 35 produces a level signal which may be a DC voltage determined by the level $V_{p-p}$ of the energy dispersal signal to be superposed on the video signal, and a level data which may be a digital code indicative of the level of the energy dispersal signal or the level signal. The level setting circuit 35 can be easily constituted in various manners, and thus it would not be necessary to describe an inner circuit configulation thereof.

The timing generation circuit 31 comprises a frame sync detection circuit 311, a 1/2 field delay circuit 312, and a timing pulse generator 313. The frame sync detection circuit 311 detects the frame sync signal B from the input video signal A. The 1/2 field delay circuit 312 delays the frame sync signal B outputted from the frame sync detection circuit 311 by a period of 1/2 field to obtain a delayed frame sync signal B1. The timing pulse generator 313 is triggered by the delayed frame sync signal B1 and generates the timing pulse C which is a rectangular pulse signal rising at the leading edge of the delayed frame sync signal B1 and having a pulse width equal to a period of 1 field. In other words, the output of the timing pulse generator 313 becomes a high level from the center of the first field of a frame to the center of the second field of the frame and a low level from the center of the second field of the frame to the center of the first field of the next frame. The timing pulse generator 313 may be constituted by a monostable multivibrator.

The energy dispersal signal generation circuit 32 comprises an integrator 321, and a variable amplifier 322. The integrator 321 integrates the timing pulse C outputted from the timing generation circuit 31 to obtain an integrated signal C1. The integrated signal C1 is amplified by the variable amplifier 322. The gain of the variable amplifier 322 is controlled by the level signal from the level setting circuit 35 so that the output of the variable amplifier 322 has the level $V_{p-p}$. The output of the variable amplifier 322 is the energy dispersal signal C2 to be superposed on the video signal.

The level information adding circuit 34 comprises a control line detection circuit 341, and a level information superposing circuit 342. The control line detection circuit 341 detects the control line in each field and producing a timing signal indicative of the position of the control line, or the position in which the level data is to be superposed. The control line detection circuit 341 may be easily constituted by using a vertical and horizontal sync detector and a horizontal line counter. The level information superposing circuit 342 superposed the level data outputted from the level setting circuit 35 on the input video signal A in the position indicated by the timing signal from the control line detection circuit 341, i.e., in the control line, to obtain a video signal D added with the level data in the control line. In Fig. 4, the level data superposed control line is indicated by hatching.

The video signal D and the energy dispersal signal C2 are added by the adder 33 to obtain the video signal E added with both the energy dispersal signal and the level data.

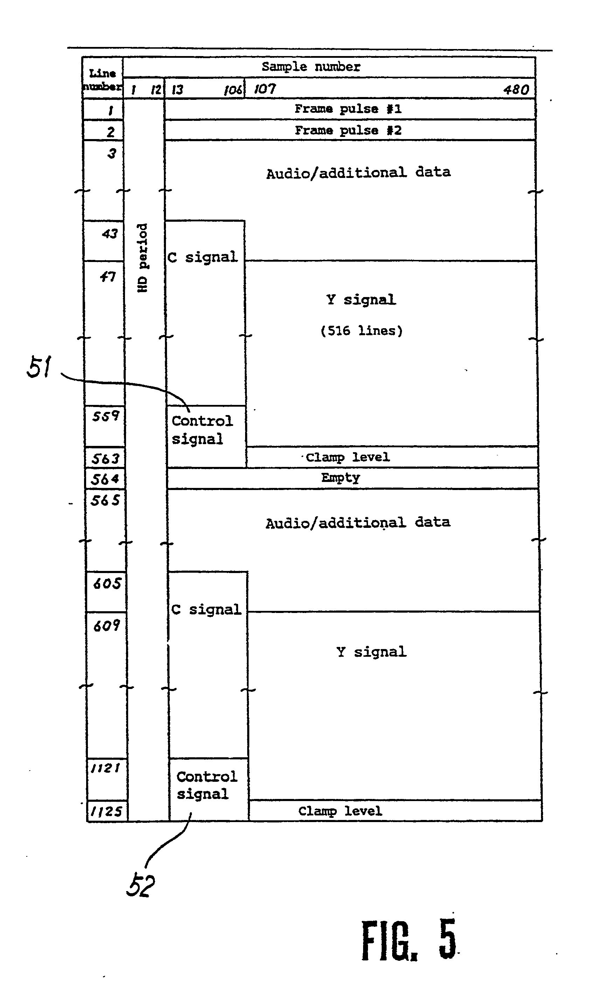

In the case of the MUSE (Multiple Sub-Nyquist Sampling Encoding) system, a high-definition television satellite broadcasting system proposed by NHK (Japan Broadcasting Corporation), the level data may be inserted in the control signal area of the MUSE transmission signal. The MUSE system is explained in an article, "A Single Channel Transmission System. for HD-TV Satellite Broadcasting : MUSE" by Y. Ninomiya et al., the Transactions of the Institute of Electronics and Communication Engineers of Japan, VOL.J68-D No.4 (April 1985), pp.647-654. The transmission signal construction of the MUSE system is shown in Fig. 5, in which lines 559-563 and lines 1121-1125 in each frame are used as control signal areas 51 and 52. In each of the areas 51 and 52, a 32-bit control signal is inserted. Since three bits from bit No.21 to bit No.23 of the 32-bit control signal is not used and left empty as extension bits in the MUSE system, the level data may be transmitted using these extension bits.

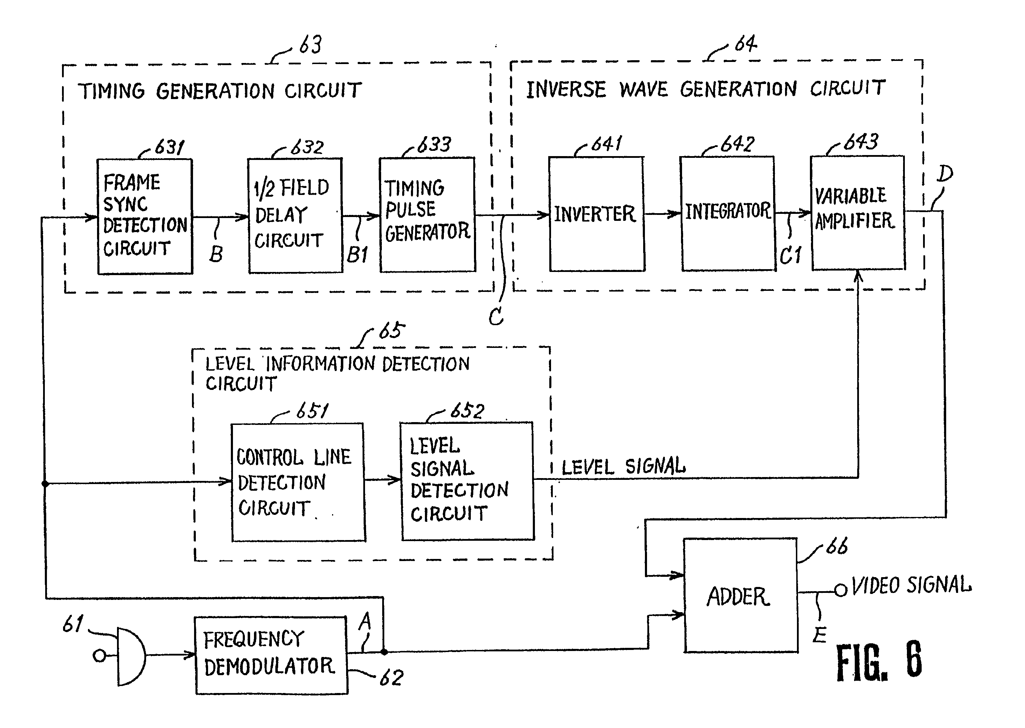

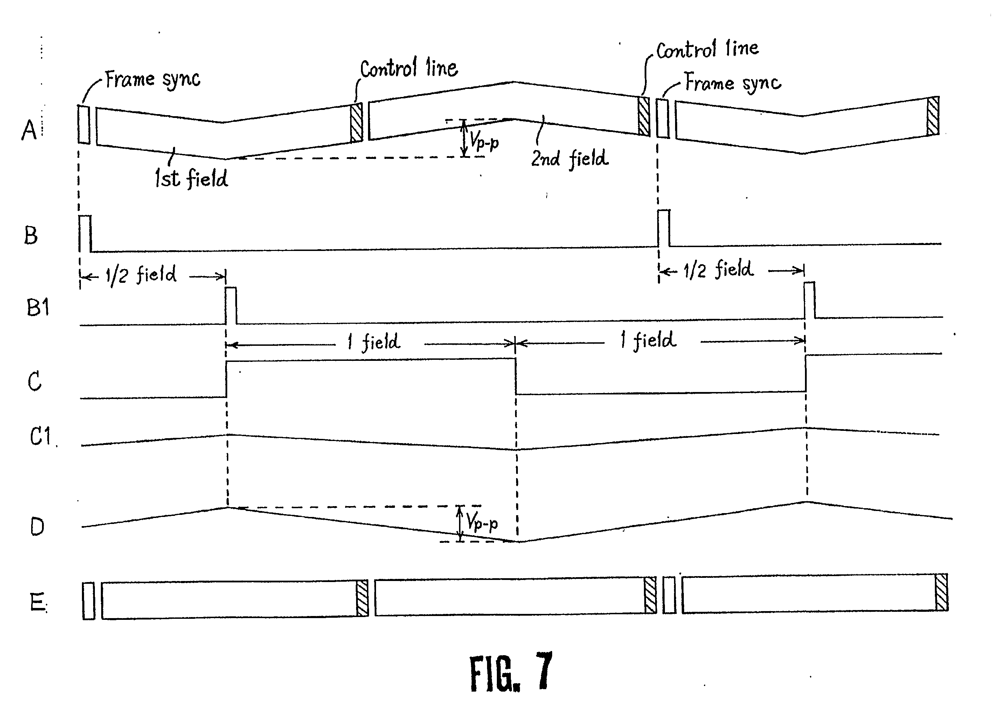

Fig. 6 is a schematic block diagram showing a receiver incorporating therein an energy dispersal signal removing apparatus as an embodiment of the present invention ; and Fig. 7 is a schematic waveform diagram showing signals at corresponding portions A, B, B1, C, C1, D and E in the block diagram of Fig. 6. The FM video signal transmitted from the transmitter of the type as shown in Fig. 3 is received by an antenna 61, and frequency-demodulated to obtain a received video signal A. The energy dispersal signal removing apparatus comprises a timing generation circuit 63 for generating from the received video signal A a timing pulse C indicative of a timing at which the energy dispersal signal is superposed on the received video signal, a level information detection circuit 65 for detecting the level data from the received video signal and producing from the detected level data a level signal which may be a DC signal, an inverse wave generation circuit 64 for generating an inverse wave of energy dispersal signal D which is opposite in phase to and the same in level as the energy dispersal signal superposed on the received video singal based on the timing pulse C generated by the timing generation circuit 63 and the level signal produced by the level information detection circuit 65, and an adder 66 for adding the inverse wave D and the received video signal A to obtain a video signal E having removed therefrom the energy dispersal signal.

The level information detection circuit 65 comprises a control line detection circuit 651, and a level signal detection circuit 652. The control line detection circuit 651 detects from the received video signal A the control line in each field and producing a timing signal indicative of the position of the control line, or the position in which the level data is to superposed. The control line detection circuit 651 may have the similar construction to the control line detection circuit 341 in Fig. 3. The level signal detection circuit 652 detects the level data superposed in the detected control line, and produces form the detected level data a level signal which may be a DC voltage signal use for controlling the inverse wave generation circuit 64.

The timing generation circuit 63 comprises a frame sync detection circuit 631, a 1/2 field delay circuit 632, and a timing pulse generator 633. The frame sync detection circuit 311 detects the frame sync signal B from the received video signal A. The 1/2 field delay circuit 632 delays the frame sync signal B outputted from the frame sync detection circuit 631 by a period of 1/2 field to obtain a delayed frame sync signal B1. The timing pulse generator 633 is triggered by the delayed frame sync signal B1 and generates the timing pulse C which is a rectangular pulse signal rising at the leading edge of the delayed frame sync signal B1 and having a pulse width equal to a period of 1 field. In other words, the output of the timing pulse generator 633 becomes a high level from the center of the first field of a frame to the center of the second field of the frame and a low level from the center of the second field of the frame to the center of the first field of the next frame. The timing pulse generator 633 may be constituted by a monostable multivibrator. The timing generation circuit 63 may be the same in construction as the timing generation circuit 31 in Fig. 3.

The inverse wave generation circuit 32 comprises an inverter 641, an integrator 642, and a variable amplifier 643. The inverter 641 inverts the phase of the timing pulse C outputted from the timing generation circuit 63 to obtain an inverted timing pulse which is opposite in phase to the timing pulse C. The integrator 642 integrates the inverted timing pulse to obtain an integrated signal C1. The integrated signal C1 is amplified by the variable amplifier 643. The gain of the variable amplifier 643 is controlled by the level signal from the level information detection circuit 65 so that the output inverse wave D of the variable amplifier 643 has the level $V_{p-p}$, which is the level of the energy dispersed signal superposed on the video signal at the transmitter and indicated by the level data superposed on the video signal at the transmitter. Thus, the inverse wave D is opposite in phase to and the same in level as the energy dispersal signal superposed on the received signal A.

The inverse wave D is added to the received video signal A by the adder 66 to obtain the video signal E. Since the inverse wave D is opposite in phase to and the same in level as the energy dispersal signal superposed on the received signal A, the energy dispersal signal is completely eliminated from the received video signal A by the addition of the received video signal A and the inverse wave D. Thus, the video signal E is completely free from the energy dispersal signal.

In the case of the MUSE system, since the receiver already has a circuit for detecting the control signal, it is easy to detect the level data contained in the control signal.

It should be understood that the embodiments described hereinabove are for the understanding of the present invention and can be modified in various manners within the scope of the present invention as defined in the appended claims.

**Claims**

1.  An energy dispersal signal adding apparatus for adding an energy dispersal signal to a video signal, comprising :
      timing generation means for generating from an input video signal a timing signal indicative of a timing at which the energy dispersal signal is to be superposed on the input video signal ;
      level setting means for producing level information indicative of a level of the energy dispersal signal ;
      energy dispersal signal generation means for generating an energy dispersal signal based on said timing signal and said level information ;
      level information adding means for superposing said level information on the video signal to obtain a video signal containing therein said level information ; and

adding means for adding the energy dispersal signal from said energy dispersal signal generation means and the video signal from said level information adding means.

2. An apparatus according to claim 1, wherein said level information adding means superposes said level information on said input video signal in a vertical blanking period.

3. An apparatus according to claim 1, wherein said energy dispersal signal generation means comprises :

means responsive to said timing signal from said timing generation means for generating a basic energy dispersal signal having a predetermined level ; and

variable amplification means whose gain is controlled by said level information produced by said level setting means for amplifying said basic energy dispersal signal to the level indicated by said level information.

4. An apparatus according to claim 1, wherein said timing generation means comprises :

frame sync detection means for detecting a frame synchronization signal from said input video signal ;

delay means for delaying said frame synchronization signal detected by said frame sync detection means for a period of 1/2 field to obtain a delayed frame synchronization signal ; and

pulse generating means responsive to said delayed frame synchronization signal for generating a rectangular timing pulse which rises at a leading edge of said delayed frame synchronization signal and has a pulse width of 1 field, and

wherein said energy dispersal signal generation means comprises :

integrating means for integrating said rectangular timing pulse ; and

variable amplification means for amplifying an output signal of said integrating means, a gain of said variable amplification means being controlled by said level information produced by said level setting means.

5. An energy dispersal signal removing apparatus for removing an energy dispersal signal from an input video signal which is superposed with the energy dispersal signal and with level information indicative of a level of the energy dispersal signal, comprising :

timing generation means for generating from the input video signal a timing signal indicative of a timing at which the energy dispersal signal is superposed on the input vide signal ;

level information detection means for detecting said level information from the input video signal ;

inverse wave generation means for generating an inverse wave of energy dispersal signal which is opposite in phase to and the same in level as the energy dispersal signal superposed on the input video singal based on said timing signal and said level information ; and

adding means for adding said inverse wave from said inverse wave generation means and the input video signal to obtain a video signal having removed therefrom the energy dispersal signal.

6. An apparatus according to claim 5, wherein said inverse wave generation means comprises :

means responsive to said timing signal from said timing generation means for generating a basic inverse wave of energy dispersal signal having a predetermined level ; and

variable amplification means whose gain is controlled by said level information detected by said level information detection means for amplifying said basic inverse wave to the level indicated by said level information.

7. An apparatus according to claim 5, wherein said timing generation means comprises :

frame sync detection means for detecting a frame synchronization signal from said input video signal ;

delay means for delaying said frame synchronization signal detected by said frame sync detection means for a period of 1/2 field a delayed frame synchronization signal ; and

pulse generating means responsive to said delayed frame synchronization signal for generating a rectangular timing pulse which rises at a leading edge of said delayed frame synchronization signal and has a pulse width of 1 field, and

wherein said inverse wave generation means comprises :

inverting means for inverting a phase of said rectangular timing pulse to obtain an inverted rectangular timing pulse ;

integrating means for integrating said inverted rectangular timing pulse ; and

variable amplification means for amplifying an output signal of said integrating means, a gain of said variable amplification means being controlled by said level information detected by said level information detection means.

8. A satellite broadcasting system comprising a transmitter for transmitting a frequency modulated video signal, and a receiver for receiving the signal transmitted from the transmitter,

wherein said transmitter includes an energy dispersal signal adding apparatus for adding an energy dispersal signal to a video signal to be transmitted, comprising :

first timing generation means for generating from an input video signal a timing signal indicative of a timing at which the energy dispersal signal is to be superposed on the input video signal ;

level setting means for producing level information indicative of a level of the energy dispersal signal ;

energy dispersal signal generation means for generating an energy dispersal signal based on said timing signal and said level information ;

level information adding means for superposing said level information on the video signal to obtain a video signal containing therein said level information ; and

first adding means for adding the energy dispersal signal from said energy dispersal signal generation means and the video signal from said level information adding means, an output signal of said adding means being frequncy-modulated and transmitted, and

wherein said receiver includes an energy dispersal signal removing apparatus for removing the energy dispersal signal from a received video signal received by said receiver and frequncy-demodulated, comprising :

second timing generation means for generating from the received video signal a timing signal indicative of a timing at which the energy dispersal signal is superposed on the received video signal ;

level information detection means for detecting said level information from the received video signal ;

inverse wave generation means for generating an inverse wave of energy dispersal signal which is opposite in phase to and the same in level as the energy dispersal signal superposed on the received video singal based on said timing signal from said second timing generation means and said level information from said level information detection means ; and

second adding means for adding said inverse wave from said inverse wave generation means and the received video signal to obtain a video signal having removed therefrom the energy dispersal signal.

9. An apparatus according to claim 8, wherein said level information adding means superposes said level information on said input video signal in a vertical blanking period.

10. An apparatus according to claim 8, wherein said energy dispersal signal generation means comprises :

means responsive to said timing signal from said first timing generation means for generating a basic energy dispersal signal having a predetermined level ; and

variable amplification means whose gain is controlled by said level information produced by said level setting means for amplifying said basic energy dispersal signal to the level indicated by said level information produced by said level setting means.

11. An apparatus according to claim 8, wherein said first timing generation means comprises :

frame sync detection means for detecting a frame synchronization signal from said input video signal ;

delay means for delaying said frame synchronization signal detected by said frame sync detection means for a period of 1/2 field to obtain a delayed frame synchronization signal ; and

pulse generating means responsive to said delayed frame synchronization signal for generating a rectangular timing pulse which rises at a leading edge of said delayed frame synchronization signal and has a pulse width of 1 field, and

wherein said energy dispersal signal generation means comprises :

integrating means for integrating said rectangular timing pulse ; and

variable amplification means for amplifying an output signal of said integrating means, a gain of said variable amplification means being controlled by said level information produced by said level setting means.

12. An apparatus according to claim 8, wherein said inverse wave generation means comprises :

means responsive to said timing signal from said second timing generation means for generating a basic inverse wave of energy dispersal signal having a predetermined level ; and

variable amplification means whose gain is controlled by said level information detected by said level information detection means for amplifying said basic inverse wave to the level indicated by said level information.

13. An apparatus according to claim 8, wherein said second timing generation means comprises :

frame sync detection means for detecting a frame synchronization signal from said received video signal ;

delay means for delaying said frame synchronization signal detected by said frame sync detection means for a period of 1/2 field to obtain a delayed frame synchronization signal ; and

pulse generating means responsive to said delayed frame synchronization signal for generating a rectangular timing pulse which rises at a leading edge of said delayed frame synchronization signal and has a pulse width of 1 field, and

wherein said inverse wave generation means comprises :

inverting means for inverting a phase of said rectangular timing pulse to obtain an inverted rectangular timing pulse ;

integrating means for integrating said inverted rectangular timing pulse ; and

variable amplification means for amplifying an output signal of said integrating means, a gain of said variable amplification means being controlled by said level information detected by said level information detection means.

FIG. 1  PRIOR ART

23 — ADDING CIRCUIT

22 — INVERSE WAVE GENERATION CIRCUIT

21 — TIMING GENERATION CIRCUIT

FIG. 2 PRIOR ART

FIG. 3

EP 0 431 875 A2

FIG. 4

EP 0 431 875 A2

| Line number | | | Sample number | | | | |
|---|---|---|---|---|---|---|---|
| | 1 | 12 | 13 | 106 | 107 | | 480 |
| 1 | | | Frame pulse #1 | | | | |
| 2 | | | Frame pulse #2 | | | | |
| 3 | | | Audio/additional data | | | | |
| 43 | HD period | | C signal | | | | |
| 47 | | | | | Y signal (516 lines) | | |
| 559 | | | Control signal | | | | |
| 563 | | | | | Clamp level | | |
| 564 | | | Empty | | | | |
| 565 | | | Audio/additional data | | | | |
| 605 | | | C signal | | | | |
| 609 | | | | | Y signal | | |
| 1121 | | | Control signal | | | | |
| 1125 | | | | | Clamp level | | |

51

52

## FIG. 5

FIG. 6

FIG. 7